# EUROPÄISCHE PATENTSCHRIFT

(11) **EP 2 951 663 B1**
(45) Veröffentlichungstag und Bekanntmachung des Hinweises auf die Patenterteilung: **12.10.2016**
(21) Anmeldenummer: 14703260.1
(22) Anmeldetag: 28.01.2014
(51) Int. Cl.: G06F 3/023, G06F 3/0488, G06F 3/0489, G06F 3/16, G06F 9/44, B60W 50/10, B60W 50/14

(54) **SYSTEMINITIIERTE HILFEFUNKTION FÜR DIE BEDIENUNG VON EINER, EINEM FAHRZEUG ZUGEORDNETEN VORRICHTUNG - EINGABE VON LEERZEICHEN**
SYSTEM-INITIATED HELP FUNCTION FOR OPERATING AN APPARATUS ASSOCIATED WITH A VEHICLE - INPUT OF SPACES
FONCTION D'AIDE DÉCLENCHÉE PAR LE SYSTÈME POUR LA COMMANDE D'UN DISPOSITIF ASSOCIÉ À UN VÉHICULE, ENTRÉE DE CARACTÈRES ESPACES

(30) Priorität: 02.02.2013 DE 102013001884
(43) Veröffentlichungstag der Anmeldung: 09.12.2015
(73) Patentinhaber: Audi AG, 85045 Ingolstadt (DE)
(72) Erfinder: BOUAZIZ, Tahar, 85055 Ingolstadt (DE); BETZ, Michael, 85049 Ingolstadt (DE); PAULA, Simone, 86641 Rain (DE)
(86) Internationale Anmeldenummer: PCT/EP2014/000225
(87) Internationale Veröffentlichungsnummer: WO 2014/117930

(56) Entgegenhaltungen:
- EP-A1- 1 150 204
- WO-A2-03/048930
- WO-A2-2008/014099
- US-A1- 2008 316 183

## Beschreibung

Die vorliegende Erfindung umfasst ein Verfahren zur Anzeige und/oder Ausgabe einer systeminitiierten Hilfe für die Bedienung einer einem Fahrzeug zugeordneten Vorrichtung sowie eine entsprechend eingerichtete, einem Fahrzeug zugeordneten Vorrichtung.

In modernen Fahrzeugen (Kraftfahrzeugen) ist oftmals eine Anzahl an Vorrichtungen vorhanden, bei denen und/oder für die Benutzereingaben vorgenommen werden können. Hierbei können die Vorrichtungen nicht nur aktiviert oder deaktiviert, d.h. ein- und ausgeschaltet werden, sondern es können oftmals auch Einstellungen vorgenommen, Auswahlen getroffen oder Eingaben getätigt werden.

Beispiele für derartige Vorrichtungen in Fahrzeugen sind ein satellitengestütztes Navigationssystem, eine Multi-Media-Anlage, eine Automobil-Telefonanlage oder ein in einem Fahrzeug integrierte Vorrichtung für einen Internetzugang.

Die Benutzereingaben für derartige Vorrichtungen können auf verschiedene Arten und Weisen erfolgen, wobei derzeit eine Eingabe unter Verwendung eines Dreh-/Drück-Stellers, Joysticks oder einer oder mehrerer Tasten wohl die am häufigsten verwendete Vorgehensweise darstellt. Daneben sind weitere Eingabemöglichkeiten bekannt, wie beispielsweise unter Verwendung eines Touchpad oder einer berührungsempfindlichen Anzeigeeinrichtung (Bildschirm), oder mittels Spracheingabe. In allen Fällen kann eine Anzeige der vorgenommenen Einstellungen/Auswahlen/Eingaben auf einer Anzeigeeinrichtung (Bildschirm, Head-Up-Display) erfolgen.

Bei den oben erwähnten Vorrichtungen können oder müssen zur Bedienung eine Abfolge von Zeichen (Buchstaben, Zahlen, Leerzeichen, etc.) und oder Symbolen ausgewählt oder eingegeben werden, beispielsweise bei der Zieleingabe für ein satellitengestütztes Navigationssystem, der Eingabe einer neuen Kontaktperson in die oder der Auswahl einer bekannten Kontaktperson aus der Speichereinrichtung einer Automobil-Telefonanlage, bei der Bedienung einer Vorrichtung für einen mobilen Internetzugang, etc.

Die EP 0 905 662 A2 beschreibt ein Eingabesystem wenigstens für Orts- und/oder Straßennamen mit einer Eingabeanordnung, mit einer wenigstens eine Orts- und/oder Straßenliste enthaltenen Datenquellenanordnung und mit einer Steueranordnung, die zur Suche von über die Eingabeanordnung eingegebenen Orts- oder Straßennamen in einer Orts- oder Straßenliste der Datenquellenanordnung vorgesehen ist. Zur Vereinfachung der Eingabe von Orts- und/oder Straßennamen enthält die Datenquellenanordnung außer einer ersten Orts- und/oder Straßenliste mit alphabetisch sortierten Orts- und/oder Straßennamen wenigstens eine zweite Orts- und/oder Straßenliste mit nach einem Häufigkeitskriterium sortierten Orts- und/oder Straßennamen. Von einem Spracheingabesystem der Eingabeanordnung werden Spracheingaben an die Steueranordnung weitergeleitet. Die Steueranordnung ist dann zur sequentiellen Suche eines sprachlich eingegebenen Orts- oder Straßennamens vom Anfang der zweiten Orts- oder Straßenliste vorgesehen.

Die EP 1 120 633 A2 schlägt ein Verfahren zur Eingabe von aus mindestens einem Zeichen eines Alphabets bestehenden Informationen in ein elektrisches Gerät vor, wobei nach Eingabe eines Zeichens des Alphabets das Zeichen, oder für den Fall, dass vor dem eingegebenen Zeichen bereits ein oder mehrere Zeichen eingegeben worden sind, die aus den zuvor und dem zuletzt eingegebenen Zeichen gebildete Zeichenkette mit Informationen einer Vergleichsmenge von Informationen verglichen wird, und dass bei Übereinstimmung des Zeichens mit dem ersten Zeichen einer Information der Vergleichsmenge oder bei Übereinstimmung der Zeichenkette mit dem Beginn einer Information der Vergleichsmenge diese Information als einzugebende Information angeboten wird.

Die DE 10 2005 018 467 A1 hat ein Verfahren zur Zielauswahl in einem Navigationssystem zum Gegenstand, bei dem jedes Ziel aus einer Gesamtheit aller Ziele durch Zielparameter definiert ist und durch Eingeben einzelner Zeichen für jeweils einen Zielparameter eine Menge der möglichen Ziele aus der Gesamtheit aller Ziele schrittweise eingeschränkt wird. Es ist vorgesehen, dass bei dem Eingeben der Zeichen von einem Zielparameter zu einer Eingabe eines Zeichens für einen anderen Zielparameter gewechselt werden kann.

Die DE 10 2007 023 313 A1 beschreibt eine Anzeigeeinrichtung und ein Verfahren zum Betrieb einer elektronischen Anzeigeeinrichtung zur Anzeige mehrerer Zeichen eines Zeichensatzes, insbesondere zur Anzeige von Buchstaben und/oder Ziffern. Zumindest ein Zeichen des Zeichensatzes kann durch Betätigen einer Anwahleinrichtung angewählt und durch Betätigen einer Auswahleinrichtung zur Weiterverarbeitung ausgewählt werden. Die Zeichen werden dabei auf einer gekrümmten Bogenlinie angeordnet und angezeigt.

Und die DE 10 2008 049 636 A1 beschreibt ein Verfahren zum Eingeben eines Ziels für ein Navigationssystem. Das Verfahren umfasst ein Erfassen einer Zeichenkette, welche von einem Benutzer als Teil einer Bezeichnung des Ziels eingegeben wird, und ein Bestimmen einer Menge von Zielbezeichnungen in Abhängigkeit von der erfassten Zeichenkette. Die Menge von Zielbezeichnungen wird bestimmt, indem diejenigen Zielbezeichnungen aus einem Vorrat an Zielbezeichnungen ausgewählt werden, welche die Zeichenkette umfassen. Das Verfahren umfasst weiterhin ein Anzeigen der bestimmten Menge von Zielbezeichnungen auf einer Anzeigeeinheit für den Benutzer. Schließlich wird eine von dem Benutzer getroffene Auswahl einer Zielbezeichnung aus der angezeigten Menge von Zielbezeichnungen erfasst.

Die US 2008/316183 A1 offenbart Systeme, Verfahren und Vorrichtungen zum Interpretieren von manuellen Wischgesten als Eingabe in Verbindung mit berührungsempfindlichen Benutzerschnittstellen, die virtuelle Tastaturen umfassen. Diese erlauben es einem Benutzer Text unter Verwendung der virtuellen Tastatur einzugeben, um bestimmte Funktionen auszuführen unter Verwendung von Wischbewegungen entlang des Tastenbereichs anstatt die Tasten anzutippen.

EP 1 150 204 A1 offenbart ein Verfahren und eine Vorrichtung zum Betreiben eines Informationsverarbeitungssystems, die dynamisches Darstellen von Hilfe-Items an einen Benutzer verwenden.

Die WO 2008/014099 A2 offenbart ein Verfahren für die Verwaltung einer kontextuellen Assistenzapplikation. Das Verfahren weist auf ein Starten einer Hilfeanwendung, ein Bestimmen, dass ein vordefiniertes Ereignis bei einer Zielanwendung eingetreten ist, durch die Hilfeanwendung und Darstellen einer Hilfefunktion auf einer Benutzerschnittstelle in Antwort auf das Eintreten des vordefinierten Ereignisses.

Die WO 03/048930 A2 offenbart ein Verfahren für eine Kontextsensitive und Benutzerrollensensitive Darstellung einer Hilfeinformation in einem Datenverarbeitungssystem, wobei die Hilfeinformation durch einen Benutzer aufgerufen wird, aufweisend die folgenden Schritte: Bestimmen eines aktuellen Kontexts, in welchem das Datenverarbeitungssystem sich zum Zeitpunkt des Hilfeaufrufs befindet; Bestimmen, in welcher Benutzerrolle der Benutzer bei dem Datenverarbeitungssystem registriert ist; Abrufen von geeigneter Hilfeinformation in einer Hilfedatenbank abhängig von dem bestimmten aktuellen Kontext und der bestimmten Benutzerrolle; und Darstellen der geeigneten Hilfeinformation an den Benutzer.

Es ist Aufgabe der vorliegenden Erfindung, eine Lösung dafür anzubieten, wie einem Nutzer das Eingeben eines Leerzeichens bei einer einem Fahrzeug zugeordneten Vorrichtung erleichtert werden kann.

Diese Aufgabe wird gelöst durch das Verfahren gemäß Anspruch 1 sowie die Vorrichtung gemäß Anspruch 5. Vorteilhafte Weiterbildungen der Erfindung sind Gegenstand der Unteransprüche und ergeben sich aus der Beschreibung sowie den beigefügten Figuren.

Erfindungsgemäß wird ein Verfahren zur Anzeige und/oder Ausgabe einer systeminitiierten Hilfe für die Bedienung einer einem Fahrzeug zugeordneten Vorrichtung vorgeschlagen. Bei der Vorrichtung sind wenigstens alphanumerische Zeichen (Buchstaben, Zahlen, Leerzeichen, etc.) und/oder Symbole mittels einer Bedieneinrichtung eingeb- oder auswählbar und zu einer Zeichen- oder Funktionsgruppe zusammenstell- und in wenigstens einem Eingabefeld auf einer ersten Anzeigeeinrichtung anzeigbar, und ist für einen Nutzer wenigstens eine Hilfeinformation für wenigstens eine Bedienhandlung an der Vorrichtung visuell auf der ersten oder einer zweiten Anzeigeeinrichtung anzeigbar und/oder mittels einer Lautsprechereinrichtung akustisch ausgebbar.

Das Verfahren ist dadurch gekennzeichnet, dass in einem ersten Schritt ein Erkennungsvorgang durchgeführt wird, aufgrund dessen erkannt wird, ob durch den Nutzer in einem nächsten Bedienschritt mit einem vorgebbaren Wahrscheinlichkeitsgrad ein Leerzeichen eingeben wird oder werden muss, und in einem zweiten Schritt für den Fall, dass der Erkennungsvorgang ein positives Ergebnis aufweist, dem Nutzer eine Hilfestellung auf der ersten oder zweiten Anzeigeeinrichtung angezeigt und/oder mittels der Lautsprechereinrichtung ausgegeben wird, wobei die Hilfestellung eine Hilfeinformation darüber aufweist, wie bei der Vorrichtung mittels einer Bedienhandlung ein Leerzeichen eingegeben werden kann.

Vielen Nutzern von einem Fahrzeug zugeordneten Vorrichtungen, wie beispielsweise satellitengestützten Navigationssystemen nach dem Stand der Technik ist bekannt, dass Leerzeichen eingegeben werden können. Hierzu sind aus dem Stand der Technik auch eine Reihe von Lösungen bekannt, wie spezielle Leerzeichen-Einfügetasten und Leerzeichen-Einfügeicons.

Bei modernen Vorrichtungen, bei der die Bedienung beispielsweise mit Hilfe eines berührungsempfindlichen Bildschirms oder eines Touchpad realisiert ist, und bei denen beispielsweise die Eingabe von Zeichen und/oder Symbolen mittels der Erkennung von Zeichen und/oder Symbolen erfolgt, die ein Nutzer mit einem Finger oder Eingabestift auf den berührungsempfindlichen Bildschirm oder das Touchpad "geschrieben" hat, sind derartige Leerzeichen-Einfügetasten und Leerzeichen-Einfügeicons oftmals nicht mehr vorhanden.

Daher ist es insbesondere bei solchen modernen Vorrichtung besonders von Vorteil, wenn dem Nutzer für eine Situation, wie sie beim Erfordernis der Eingabe eines Leerzeichens gegeben ist, eine entsprechende Hilfestellung angeboten wird.

Aber auch bei herkömmlich, also beispielsweise mit Hilfe von Taste(n), Dreh/Drück-Steller, Joy-Stick zu bedienenden Vorrichtungen kann es für einen Nutzer hilfreich sein, wenn er erfindungsgemäß für das Einfügen eines Leerzeichens eine Hilfestellung dahin erhält, wie dies bei der entsprechenden Vorrichtung erreicht, insbesondere auf eine möglichst schnelle und/oder bequeme Art und Weise erreicht werden kann.

Durch die vorliegende Erfindung erhält ein Nutzer somit eine Hilfestellung, die in damit vertraut macht, mit welcher Bedienhandlung bei der Vorrichtung ein Einfügen eines Leerzeichens möglich ist.

Dies hat nicht nur den Vorteil, dass ein Nutzer mit den Möglichkeiten der Vorrichtung vertraut wird, sondern dient insbesondere auch der Erhöhung der Verkehrssicherheit, da ein Nutzer für eine bestimmte Bedienhandlungen an der Vorrichtung - hier das Einfügen eines Leerzeichens - eine kürzere Zeit benötigt und damit die Zeitspanne einer möglichen Ablenkung vom Straßenverkehr verkürzt wird. Zusätzlich bietet dies den Vorteil, dass die Information, wie ein Leerzeichen eingegeben werden kann, nicht ständig angezeigt werden muss oder keine eigene Taste dafür bereitgestellt werden muss - der Nutzer also nicht ständig mit Informationen überschwemmt wird und dadurch auch weniger abgelenkt ist bzw. sich schneller zurechtfindet, da nur die zum Zeitpunkt wichtigen und benötigten Informationen angezeigt werden.

Gemäß einer ersten vorteilhaften Weiterbildung der Erfindung wird bei dem Verfahren die Hilfeinformation in Form von bewegten oder statischen Bildern, Zeichen, Text und/oder Symbolen angezeigt und/oder in Form eines gesprochenen Texts ausgegeben.

Gemäß einer zweiten vorteilhaften Weiterbildung der Erfindung wird bei dem Verfahren die Hilfeinformation in Abhängigkeit davon angezeigt und/oder ausgegeben, (a) wie oft die Hilfeinformation für die Eingabe eines Leerzeichens bei der Vorrichtung während einer Fahrt bereits angezeigt und/oder ausgegeben wurde, (b) wie oft die Hilfeinformation für die Eingabe eines Leerzeichens bei der Vorrichtung einem erkannten und/oder bekannten Nutzer innerhalb eines vorgebbaren Zeitraums bereits angezeigt und/oder ausgegeben wurde, und/oder (c) in welcher Art und Weise ein Nutzer ein Leerzeichen bei der Vorrichtung eingibt.

Eine sich rein schematisch wiederholende Hilfestellung wird von einem Nutzer oftmals als Belästigung empfunden. Durch eine "abgestufte" Hilfestellung kann dies vermieden werden und der vermutete Wissens- bzw. Kenntnisstand eines Nutzers berücksichtigt werden.

Gemäß noch einer weiteren vorteilhaften Weiterbildung der Erfindung ist die Hilfestellung aktivierbar und deaktivierbar.

Die vorliegende Erfindung umfasst auch eine einem Fahrzeug zugeordnete Vorrichtung, mit einer Bedieneinrichtung, mit der wenigstens alphanumerische Zeichen (Buchstaben, Zahlen, Leerzeichen, etc.) und/oder Symbole eingeb- oder auswählbar und zu einer Zeichen- oder Funktionsgruppe zusammenstellbar sind, mit einer ersten Anzeigeeinrichtung, auf der die Zeichen, Symbole, Zeichen- und/oder Funktionsgruppe in wenigstens einem Eingabefeld anzeigbar sind, und einer Hilfeeinrichtung, durch die für einen Nutzer wenigstens eine Hilfeinformation für wenigstens eine Bedienhandlung an der Vorrichtung visuell auf der ersten oder einer zweiten Anzeigeeinrichtung anzeigbar und/oder mittels einer Lautsprechereinrichtung akustisch ausgebbar ist.

Die Vorrichtung ist dadurch gekennzeichnet, dass sie Erkennungsmittel aufweist, mittels derer durch einen Erkennungsschritt erkannt wird, ob durch den Nutzer in einem nächsten Bedienschritt mit einem vorgebbaren Wahrscheinlichkeitsgrad ein Leerzeichen eingeben wird oder werden muss, und die Hilfeeinrichtung dazu eingerichtet ist, dass für den Fall, dass durch das Erkennungsmittel ein positives Ergebnis des Erkennungsschritts festgestellt wird, dem Nutzer eine Hilfestellung auf der ersten oder zweiten Anzeigeeinrichtung angezeigt und/oder mittels der Lautsprechereinrichtung ausgegeben wird, derart, dass die Hilfestellung eine Hilfeinformation darüber aufweist, wie bei der Vorrichtung mittels einer Bedienhandlung ein Leerzeichen eingegeben werden kann.

Gemäß einer ersten vorteilhaften Weiterbildung der Vorrichtung ist die Hilfeeinrichtung dazu eingerichtet, dass sie die Hilfeinformation in Form von bewegten oder statischen Bildern, Zeichen, Text und/oder Symbolen auf der ersten oder zweiten Anzeigeeinrichtung anzeigt und/oder in Form eines gesprochenen Texts mittels der Lautsprechereinrichtung ausgibt.

Gemäß einer zweiten vorteilhaften Weiterbildung der Vorrichtung ist die Hilfeeinrichtung dazu eingerichtet, dass sie die Hilfeinformation in Abhängigkeit davon anzeigt und/oder ausgibt, (a) wie oft die Hilfeinformation für die Eingabe eines Leerzeichens bei der Vorrichtung während einer Fahrt bereits angezeigt und/oder ausgegeben wurde, (b) wie oft die Hilfeinformation für die Eingabe eines Leerzeichens bei der Vorrichtung einem erkannten und/oder bekannten Nutzer innerhalb eines vorgebbaren Zeitraums bereits angezeigt und/oder ausgegeben wurde, und/oder (c) in welcher Art und Weise ein Nutzer ein Leerzeichen bei der Vorrichtung eingibt.

Gemäß einer dritten vorteilhaften Weiterbildung der Vorrichtung ist die Hilfeeinrichtung dazu eingerichtet, dass die Hilfestellung aktivierbar und deaktivierbar ist.

Ebenso ist es von Vorteil, wenn bei der Vorrichtung die erste und/oder zweite Anzeigeeinrichtung wenigstens einen Bildschirm und/oder ein Head-Up-Display, und die Bedieneinrichtung wenigstens eine Taste, Tastatur, einen Dreh-/Drück-Steller, Joystick, ein Touchpad, einen berührungsempfindlichen Bildschirm und/oder eine Vorrichtung zur Spracheingabe und Spracherkennung umfasst.

Weiter ist es vorteilhaft, wenn die Vorrichtung dazu eingerichtet ist, dass ein Leerzeichen durch ein im Wesentlichen waagerechtes Streichen mit einem Finger über eine vorgebbare Strecke oder einen vorgebbaren Anteil der Breite eines berührungsempfindlichen Bildschirms oder Touchpad eingegeben werden können.

Die vorliegende Erfindung wird anhand der beigefügten Zeichnungen näher erläutert.

Dabei zeigen:
- Fig. 1:: Ein schematisches Ablaufdiagramm eines erfindungsgemäßen Verfahrens;
- Fig. 2:: Eine schematische Darstellung eines Beispiels der erfindungsgemäßen Hilfestellung.

Die Darstellungen in den Figuren sind rein schematisch und nicht maßstabsgerecht.

Die nachfolgend erläuterten Ausführungsbeispiele stellen bevorzugte Ausführungsformen der vorliegenden Erfindung dar. Die vorliegende Erfindung ist selbstverständlich nicht auf diese Ausführungsformen beschränkt.

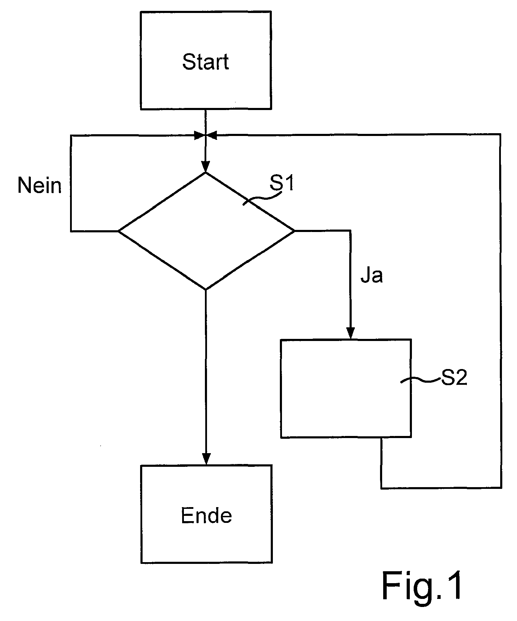

In Fig. 1 ist ein schematisches Ablaufdiagramm des erfindungsgemäßen Verfahrens dargestellt. Das Verfahren startet, wenn beispielsweise die dem Fahrzeug zugeordnete Vorrichtung, beispielsweise ein satellitengestütztes Navigationssystem, aktiviert wird.

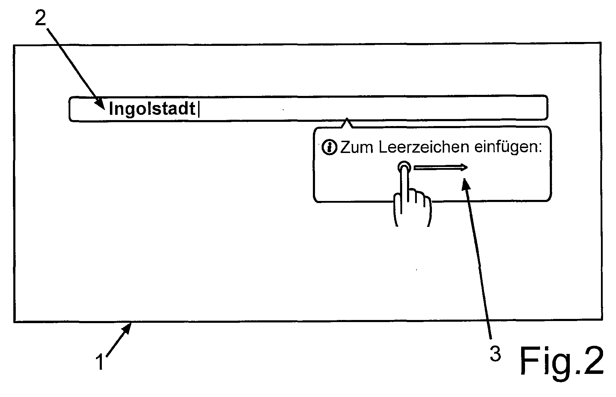

Nach einer Aktivierung der Vorrichtung wählt ein Nutzer beispielsweise nacheinander eine Mehrzahl an Zeichen/Symbolen 2 mit Hilfe einer Bedieneinrichtung aus oder gibt diese, z.B. mittels "Schreiben" auf ein Touchpad oder einen berührungsempfindlichen Bildschirm und Durchführung einer Handschriftenerkennung ein. Diese Mehrzahl an Zeichen/Symbolen 2 wird dem Nutzer üblicherweise auf einer ersten Anzeigeeinrichtung 1 wie einem Bildschirm oder einer Windschutzscheibe mittels einer Head-Up-Displayeinrichtung angezeigt. Ein Beispiel für eine derartige Auswahl und Anzeige ist in Fig. 2 in Form von "Ingolstadt" dargestellt.

Gemäß Schritt S1 wird nun ein Erkennungsvorgang durchgeführt, aufgrund dessen erkannt wird, ob durch den Nutzer in einem nächsten Bedienschritt mit einem vorgebbaren Wahrscheinlichkeitsgrad ein Leerzeichen eingeben wird oder werden muss.

Der vorgebbare Wahrscheinlichkeitsgrad ist nicht besonders beschränkt, sollte aber so gewählt werden, dass mit einer Wahrscheinlichkeit von mehr als 60%, 65%, 70%, 75%, 80%, 85%, 90%, 95%, 96%, 97%, 98%, 99% oder 100% davon ausgegangen werden kann, dass der Nutzer in einem nächsten Bedienschritt die Eingabe eines Leerzeichens vornehmen möchte. Als Kriterium für die entsprechende Berechnung bzw. Abschätzung der Wahrscheinlichkeit kann beispielsweise die Eingabe eines vollständige Wortes oder die Übernahme eines Wortes aus einer vorgeschlagenen Auswahlliste dienen.

Die Beurteilung, dass ein vollständiges Wort vorliegt, ist dann, wenn ein Wort aus einer vorgeschlagenen Auswahlliste übernommen wurde, unproblematisch. Gibt ein Nutzer einzelne Zeichen in die Vorrichtung ein oder wählt diese aus, kann die Beurteilung, ob das Wort vollständig ist, beispielsweise durch Vergleich mit in einer Datenbank gespeicherten Einträgen erfolgen, in der beispielsweise im Falle eines satellitengestützten Navigationssystems alle möglichen Ortsnamen, Straßennamen, "Points of Interest", etc. gespeichert sind.

Wenn, wie dies im in Fig. 2 gezeigten Beispiel gezeigt ist, ein Nutzer in eine Vorrichtung - hier beispielhaft eine satellitengestützten Navigationseinrichtung - den Namen einer Ortschaft (hier "Ingolstadt") eingegeben hat oder diese Ortschaft - gegebenenfalls nach Eingabe von einem ersten Teil des Ortsnamens - aus einer Liste von durch die Vorrichtung vorgeschlagenen Ortschaften ausgewählt hat, kann bei einer Vorrichtung, bei der anschließend nicht in ein spezielles Feld für die Eingabe einer Straße gewechselt werden kann oder muss (wie dies oftmals bei Vorrichtungen nach dem Stand der Technik Fall ist), beispielsweise nach Eingabe eines Leerzeichens gleich die Eingabe des Straßennamens erfolgen oder braucht gegebenenfalls auch nur die Eingabe eines Teils des Straßennamens zu erfolgen.

Wird durch den Erkennungsvorgang erkannt, dass durch den Nutzer in einem nächsten Bedienschritt mit einem vorgebbaren Wahrscheinlichkeitsgrad ein Leerzeichen eingeben wird oder werden muss, der Erkennungsvorgang also ein positives Ergebnis aufweist ("true"; "Ja" in Fig. 1), wird dem Nutzer im Schritt S2 eine Hilfestellung auf der ersten oder einer zweiten Anzeigeeinrichtung 1 angezeigt und/oder mittels der Lautsprechereinrichtung ausgegeben, wobei die Hilfestellung eine Hilfeinformation 3 darüber aufweist, wie bei der Vorrichtung mittels einer Bedienhandlung ein Leerzeichen eingegeben werden kann.

Danach - wie auch in dem Fall, dass der Erkennungsvorgang ein negatives Ergebnis aufweist - kehrt das Verfahren zu Schritt S1 zurück. Das Verfahren endet, wenn die Vorrichtung deaktiviert wird, was beispielsweise bei einem Abstellen des Fahrzeugs der Fall sein kann.

Eine "zweite Anzeigeeinrichtung" kann beispielsweise ein zweiter Bildschirm, eine zweite Head-Up-Displayeinrichtung oder aber nur ein von der Anzeige der Vorrichtung nicht verwendeter Teil eines Bildschirms oder einer Head-Up-Displayeinrichtung sein. Bei einer Anzeige der Hilfestellung auf einer Anzeigeeinrichtung ist es in der Regel von Vorteil, wenn die Anzeige der Hilfestellung in relativer Nähe zu der Anzeige der eingegebenen oder ausgewählten Zeichen/Symbolen 2 erfolgt, beispielsweise kurz neben, unterhalb oder oberhalb der eingegebenen oder ausgewählten Zeichen/Symbole 2, von denen angenommen wird, dass ein Nutzer danach ein Leerzeichen einfügen möchte.

Bei der Eingabe/Auswahl von Zeichen/Symbolen 2 in eine Vorrichtung wird ein Nutzer regelmäßig die eingegebenen Zeichen/Symbole 2 auf der Anzeigeeinrichtung 1 betrachten, so dass er auch eine Hilfestellung, die in der Nähe dieser Zeichen/Symbole 2 angezeigt wird, unmittelbar wahrnimmt, ohne seine Blickrichtung wesentlich verändern zu müssen. Ein Beispiel für eine räumlich nahe Darstellung von Zeichen/Symbolen 2 und einer Hilfestellung für eine nächste Bedienhandlung ist in Fig. 2 gezeigt.

Die Hilfestellung kann alternativ oder ergänzend auch mittels einer Lautsprechereinrichtung, wie sie beispielsweise für das Autoradio oder eine Multi-Media-Anlage eines Fahrzeugs vorhanden ist, erfolgen. Hierbei kann beispielsweise eine gesprochener Hilfetext mit einer Anleitung zum Eingeben eines Leerzeichens ausgegeben werden, optional unterstützt durch eine statische oder dynamische Anzeige auf einer Anzeigeinrichtung.

Da eine rein schematische Hilfestellung von einem Nutzer oftmals als Belästigung empfunden wird, kann die Hilfeeinrichtung in vorteilhafter Weise dazu eingerichtet sein, dass sie die Hilfeinformation 3 in Abhängigkeit davon anzeigt und/oder ausgibt, (a) wie oft die Hilfeinformation 3 für die Eingabe eines Leerzeichens bei der Vorrichtung während einer Fahrt bereits angezeigt und/oder ausgegeben wurde, (b) wie oft die Hilfestellung für die Eingabe eines Leerzeichens bei der Vorrichtung einem erkannten und/oder bekannten Nutzer innerhalb eines vorgebbaren Zeitraums bereits angezeigt und/oder ausgegeben wurde, und/oder (c) in welcher Art und Weise ein Nutzer ein Leerzeichen bei der Vorrichtung eingibt.

Hierdurch kann eine oftmals unnötige "Informationsflut" für einen Nutzer vermieden werden und eine an die jeweiligen Bedürfnisse und Kenntnisse eines Nutzers angepasste Hilfestellung angezeigt und/oder ausgegeben werden.

Beispielsweise kann sowohl der Umfang der Hilfeinformation 3 als auch die Art und Weise der Anzeige und/oder Ausgabe der Hilfeinformation 3 je nach gegebener Situation verändert werden. Beispielsweise kann bei einer ersten Anzeige und/oder Ausgabe eine Hilfeinformation 3 unter Anzeige von bewegten (animierten) Bildern, Zeichen, Text und/oder Symbolen, und/oder unter Ausgabe einer gesprochenen Erläuterung erfolgen, bei einer wiederholten Hilfeinformation 3 jedoch nur noch durch Anzeige eines nicht animierten Bildes. Hierdurch kann bei einem Nutzer eine Erinnerung an die animierte und/oder akustisch unterbreitete Hilfestellung wachgerufen werden oder es kann dem Nutzer eine Gedächtnisstütze für die Eingabe eines Leerzeichens bei der Vorrichtung geboten werden.

Das Erkennen eines Nutzers kann auf jede geeignete Weise erfolgen. Beispielsweise kann die Identifizierung eines Nutzers anhand eines verwendeten Fahrzeugschlüssels erfolgen. Bei einem Fahrzeug mit einer über Funkwellen oder Infrarot-Strahlen bedienbaren Zentralverriegelung werden zwischen Schlüssel und einem dem Fahrzeug zugeordneten Empfänger kodierte Signale ausgetauscht. Diese kodierten Signale können beispielsweise um Nutzerinformationen ergänzt und in einer entsprechenden Auswertungseinrichtung ausgewertet werden.

Ein Nutzer kann aber beispielsweise auch über ein von ihm verwendetes GSM- oder UMTS-Endgerät (Mobiltelefon, PDA, Tablet-PC, Notebook) erkannt werden. Jedes Mobiltelefon verfügt über eine IMEI-Nummer (IMEI= International Mobile Equipment Identity), anhand derer jedes GSM- oder UMTS-Endgerät eindeutig identifiziert werden kann. Damit ein Nutzer durch das von ihm verwendete GSM- oder UMTS-Endgerät identifiziert werden kann, ist es daher lediglich erforderlich, dass sich ein Nutzer mit seinem GSM- oder UMTS-Endgerät beim oder nach dem Einsteigen in das Fahrzeug anmeldet bzw. authentifiziert, und Nutzerdaten zu dem jeweiligen, erkannten Nutzer in einer Speichervorrichtung, die entweder dem Fahrzeug zugeordnet ist oder auf die vom Fahrzeug aus ein Zugriff besteht, vorhanden sind.

Ein Erkennen eines Nutzers kann erfindungsgemäß aber auch mittels aller weiteren derzeit und zukünftig verfügbaren Technologien erfolgen, beispielsweise über eine Gesichtserkennung, Stimmerkennung, Augenhintergrunderkennung, Fingerabdruckerkennung, etc.

Die Auswahl eines bekannten Nutzers kann auf einfache Weise auch dadurch erfolgen, dass ein Nutzer beim Besteigen eines Fahrzeugs ein für ihn gespeichertes Nutzerprofil auswählt und aktiviert, wobei das Nutzerprofil beispielsweise in einer dem Fahrzeug zugeordneten Speichereinrichtung abgelegt ist.

Die Erkennung dahin, ob eine (erste) Fahrt vorliegt oder bereits eine weitere (zweite) Fahrt, und ob damit ein Reset der Art und/oder des Umfangs der Anzeige und/oder Ausgabe der Hilfestellung erfolgen soll, kann beispielsweise über die Erfassung der an der Klemme 15 eines Zündanlassschalters anliegenden Spannung erfolgen. Da es aber oftmals vorkommt, dass eine Fahrt für einen kürzeren Zeitraum unterbrochen wird, kann zur Fahrterkennung zusätzlich eine gewisse Zeitspanne vorgesehen sein, die bis zur Erkennung einer weiteren (zweiten) Fahrt vergangen sein muss.

Die Zeiträume, die vergangen sein müssen, damit einem erkannten und/oder bekannten Nutzer für die Eingabemöglichkeit für ein Leerzeichen wieder eine ausführliche(re) Hilfestellung angezeigt und/oder ausgegeben wird, können in jeder geeigneten Weise gewählt werden.

Bei einem Fahrzeug zugeordneten Vorrichtungen, bei denen Zeichen und/oder Symbole eingegeben, ausgewählt und/oder gelöscht werden können, kann zwischen einer Auswahl von Zeichen/Symbolen mittels eines sogenannten "Speller" und (insbesondere bei moderneren Vorrichtungen) der Eingabe unter Verwendung eines Touchpad oder eines berührungsempfindlichen Bildschirms unterschieden werden.

Bei einem Speller können ein oder mehrere Zeichen (Buchstaben, Zahlen, Leerzeichen, etc.) und/oder Symbole üblicherweise mit Hilfe eines Dreh-/Drück-Stellers durch Drehen des Dreh-/Drück-Stellers angewählt und durch Drücken des Dreh-/Drück-Stellers ausgewählt werden. Auf ähnliche Weise kann ein oder können mehrere bereits ausgewählte Zeichen mittels Auswählen einer Löschfunktion durch Drehen des Dreh-/Drück-Stellers und anschließendem Drücken des Dreh-/Drück-Stellers wieder gelöscht werden.

Wie oben bereits erwähnt, besteht - insbesondere bei moderneren Vorrichtungen - auch die Möglichkeit, Zeichen und/oder Symbole auf ein Touchpad oder einen berührungsempfindlichen Bildschirm zu schreiben und die geschriebenen Zeichen mittels einer Handschrifterkennung erkennen zu lassen. Ebenso ist es möglich, in diesem Modus durch eine entsprechende Bedienhandlung ein Leerzeichen einzugeben. Zwischen den beiden Eingabe-Modi (Speller und berührungsempfindlicher Oberfläche) kann ein Nutzer in der Regel hin- und herschalten.

Wenn nun ein Nutzer in dem Modus, bei dem die Eingabe mittels einer berührungsempfindlichen Oberfläche erfolgt, ein Leerzeichen eingeben möchte, kann es vorkommen, dass er nicht weiß, wie dies in diesem Modus bei der Vorrichtung möglich ist. Daher wird er hierfür oftmals in den Speller-Modus wechseln, mit Hilfe des Spellers ein Leerzeichen eingeben und wieder in den Modus unter Verwendung einer berührungsempfindlichen Oberfläche wechseln.

Wenn dies erkannt wird, wenn also eine nicht optimale Art und Weise erkannt wird, wie ein Nutzer ein Leerzeichen bei der Vorrichtung eingibt, kann dies ebenfalls als Auslösekriterium für die Anzeige/Ausgabe einer Hilfestellung dienen, wobei hierbei dem Nutzer eine Hilfeinformation 3 angezeigt und/oder ausgegeben werden kann, wie er im Modus "berührungsempfindliche Oberfläche" durch eine einfache und rasche Bedienhandlung ein Leerzeichen eingeben kann.

Ein Wechseln zwischen verschiednen Bedienmodalitäten durch einen Nutzer kann erfindungsgemäß auch für den Erkennungsvorgang verwendet werden, aufgrund dessen erkannt wird, ob durch den Nutzer in einem nächsten Bedienschritt mit einem vorgebbaren Wahrscheinlichkeitsgrad ein Leerzeichen eingeben wird. Beispielsweise wenn ein Nutzer zuerst eine Eingabe von Zeichen/Symbolen mit Hilfe eines Touchpad vornimmt und dann zur (wahrscheinlichen) Eingabe eines Leerzeichen in den Speller wechselt.

Um eine unnötige "Informationsflut" bzw. eine Belästigung des Nutzers zu vermeiden, ist weiter vorgesehen, dass die Hilfestellung deaktivierbar ist, beispielsweise durch eine bestimmte Bedienhandlung des Nutzers oder einer anderen Person, beispielsweise einem hierfür autorisierten Werkstattmitarbeiter. Wenn der betreffende oder ein anderer Nutzer die Hilfestellung wieder erhalten möchte, ist diese selbstverständlich durch eine entsprechende Bedienhandlung wieder aktivierbar.

Wie oben bereits erwähnt, kann die Hilfeinformation 3 in jeder geeigneten Form erfolgen, beispielsweise in Form einer Anzeige von bewegten oder statischen (unbewegten) Bildern, Zeichen, Text, und/oder Symbolen und/oder in Form der Ausgabe eines gesprochenen (über einen Lautsprechereinrichtung wiedergegebenen) Texts.

Fig. 2 zeigt einen Ausschnitt aus einem Bildschirm eines Navigationssystems. Innerhalb des Ausschnitts ist ein Beispiel für eine Anzeige gemäß der vorliegenden Erfindung dargestellt. In einer oberen Zeile (Eingabefeld) sind mehrere, bereits ausgewählte oder eingegebene Zeichen (im gewählten Beispiel "Ingolstadt") auf der Anzeigeinrichtung zu sehen.

Da durch den Erkennungsvorgang erkannt wurde, dass es sich bei der Zeichenfolge "Ingolstadt" um ein vollständiges Wort handelt, und zur näheren Spezifizierung eines Fahrziels innerhalb von Ingolstadt bei der beispielhaft dargestellten Vorrichtung nun die Eingabe eines Leerzeichens erforderlich ist, wird dem Nutzer in dem in Fig. 2 gezeigten Beispiel auf der Anzeigeinrichtung eine Hilfestellung zum Eingeben eines Leerzeichens angezeigt. Im vorliegenden Beispiel, dass er zum Eingeben eines Leerzeichens eine Wischbewegung mit einem Finger von links nach rechts auf der berührungsempfindlichen Anzeigeeinrichtung 1 oder einem Touchpad durchführen kann.

Das in Fig. 2 gezeigte Beispiel zeigt eine Hilfestellung für eine Vorrichtung, die mittels einer berührungsempfindlichen Anzeigeeinrichtung 1 oder einem Touchpad bedienbar ist. Für den Fall, dass die Vorrichtung z.B. mittels Taste(n), eines Dreh-Drück-Steller, Joy-Sticks, etc. bedienbar ist, erfolgt selbstverständlich eine daran angepasste Hilfestellung, z.B. eine visuell und/oder akustisch wahrnehmbare Hilfestellung dahin, auf welche Taste/Tastenkombination ein Nutzer für die Eingabe eines Leerzeichens drücken muss, und/oder wie lange der Nutzer hierfür eine bestimmte Taste/Tastenkombination drücken muss. Bei einer (auch) mittels Sprachbefehlen bedienbaren Vorrichtung kann dem Nutzer auch eine Hilfestellung dahin angezeigt und/oder ausgegeben werden, welcher Sprachbefehl für die Eingabe eines Leerzeichens verwendet werden kann.

Im gezeigten Beispiel wird durch den Buchstaben "i" im Kreis für einen Nutzer angezeigt, dass es sich um eine informative Anzeige handelt.

Für den Nutzer kann auch die Möglichkeit bestehen, durch eine weitere Bedienhandlung zusätzliche Informationen zu der/den Möglichkeit(en) der Eingabe eines Leerzeichens zu erhalten. Eine solche weitere Bedienhandlung kann beispielsweise die Betätigung einer speziellen "Hilfetaste" sein, der Aufruf eines Kontextmenüs, ein Druck mit einem Finger auf eine Stelle der Anzeigeeinrichtung 1, z.B. die Stelle, an der das "i" im Kreis dargestellt ist, oder ein Sprachbefehl. Die zusätzliche Information kann dann ebenfalls in jeder geeigneten Weise angezeigt oder ausgeben werden, beispielsweise in Form einer angezeigten Animation, der Anzeige eines Hilfetexts und/oder in Form eines gesprochenen und über eine Lautsprechereinrichtung wiedergegebenen Texts.

Die vorliegende Erfindung umfasst auch eine einem Fahrzeug zugeordnete Vorrichtung, mit einer Bedieneinrichtung, mit der wenigstens alphanumerische Zeichen und/oder Symbole 2 eingeb- oder auswählbar und zu einer Zeichen- oder Funktionsgruppe zusammenstellbar sind, mit einer ersten Anzeigeeinrichtung 1 , auf der die Zeichen, Symbole, Zeichen- und/oder Funktionsgruppe in wenigstens einem Eingabefeld anzeigbar sind, und einer Hilfeeinrichtung, durch die für einen Nutzer wenigstens eine Hilfeinformation 3 für wenigstens eine Bedienhandlung an der Vorrichtung visuell auf der ersten oder einer zweiten Anzeigeeinrichtung anzeigbar und/oder mittels einer Lautsprechereinrichtung akustisch ausgebbar ist.

Die Vorrichtung ist dadurch gekennzeichnet, dass sie Erkennungsmittel aufweist, mittels derer durch einen Erkennungsschritt erkannt wird, ob durch den Nutzer in einem nächsten Bedienschritt mit einem vorgebbaren Wahrscheinlichkeitsgrad ein Leerzeichen eingeben wird oder werden muss, und die Hilfeeinrichtung dazu eingerichtet ist, dass für den Fall, dass durch das Erkennungsmittel ein positives Ergebnis des Erkennungsschritts festgestellt wird, dem Nutzer eine Hilfestellung auf der ersten oder zweiten Anzeigeeinrichtung angezeigt und/oder mittels der Lautsprechereinrichtung ausgegeben wird, derart, dass die Hilfestellung eine Hilfeinformation 3 darüber aufweist, wie bei der Vorrichtung mittels einer Bedienhandlung ein Leerzeichen eingegeben werden kann.

Da einem Fachmann bekannt ist, wie die erfindungsgemäße Vorrichtung aufgebaut sein kann und ihm geeignete Mittel zum Durchführen des Erkennungsschritts und zur Ausgabe der Hilfestellung bekannt sind, braucht hier nicht näher darauf eingegangen zu werden. Diese Funktionen können beispielsweise durch eine Computereinrichtung übernommen werden, wie sie in der Head-Unit von modernen Fahrzeugen vorhanden ist.

Bei der erfindungsgemäßen Vorrichtung kann in vorteilhafter Weise die Hilfeeinrichtung dazu eingerichtet sein, dass sie die Hilfestellung in Form von bewegten oder statischen Bildern, Zeichen, Text und/oder Symbolen auf der ersten oder zweiten Anzeigeinrichtung anzeigt und/oder in Form eines gesprochenen Texts mittels der Lautsprechereinrichtung ausgibt.

Gemäß einer weiteren vorteilhaften Ausgestaltung der erfindungsgemäßen Vorrichtung ist die Hilfeeinrichtung dazu eingerichtet, dass sie die Hilfestellung in Abhängigkeit davon anzeigt und/oder ausgibt, (a) wie oft die Hilfestellung für die Eingabe eines Leerzeichens bei der Vorrichtung während einer Fahrt bereits angezeigt und/oder ausgegeben wurde, (b) wie oft die Hilfestellung für die Eingabe eines Leerzeichens bei der Vorrichtung einem erkannten und/oder bekannten Nutzer innerhalb eines vorgebbaren Zeitraums bereits angezeigt und/oder ausgegeben wurde, und/oder (c) in welcher Art und Weise ein Nutzer ein Leerzeichen bei der Vorrichtung eingibt.

Bezüglich dieser erfindungsgemäßen Variationsmöglichkeiten der Hilfestellung wird auf die entsprechenden obigen Ausführungen bezüglich des erfindungsgemäßen Verfahrens verwiesen, die ohne Weiteres auf die erfindungsgemäße Vorrichtung übertragbar sind.

Eine erfindungsgemäß vorgesehene Aktivierung oder Deaktivierung der Hilfestellung kann beispielsweise mit Hilfe der Bedieneinrichtung der Vorrichtung erfolgen (z.B. speziell für die Vorrichtung vorgesehene Tasten, Tastatur, Touchpad, berührungsempfindlicher Bildschirm), aber auch durch jede andere geeignete Bedieneinrichtung, wie beispielsweise durch eine für mehrere Vorrichtungen vorgesehene Bedieneinrichtung (z.B. Dreh-Drück-Steller, JoyStick), aber auch durch externe Vorrichtungen (z.B. einer Einrichtung zum Vornehmen von Einstellungen bei Vorrichtungen des Fahrzeugs, wie es in Fachwerkstätten vorhanden ist; oder durch eine mobile Einrichtung, wie beispielsweise ein modernes Smartphone).

Die erfindungsgemäße Vorrichtung kann die Hilfestellung auf jeder hierfür geeigneten Einrichtung anzeigen und/oder mit jeder hierfür geeigneten Einrichtung ausgeben. Insoweit bestehen keine besonderen Einschränkungen. So kann beispielsweise die Hilfestellung auf einer der Vorrichtung exklusiv zugeordneten Anzeigeeinrichtung 1 angezeigt werden, aber selbstverständlich auch mittels einer Anzeigeeinrichtung, auf der Informationen von mehreren Vorrichtungen angezeigt werden können. Selbstverständlich können die optischen Anzeigen für die Vorrichtung, z.B. die ausgewählten Zeichen/Symbole 2, und die Hilfestellung auch auf verschiedenen Anzeigeinrichtungen dargestellt werden.

Auch in Bezug auf die Bedieneinrichtung für die erfindungsgemäße Vorrichtung bestehen keine besonderen Beschränkungen und diese können beispielsweise wenigstens eine Taste, Tastatur, einen Dreh-/Drück-Steller, Joystick, ein Touchpad, einen berührungsempfindlichen Bildschirm und/oder eine Vorrichtung zur Spracheingabe und Spracherkennung umfassen.

Gemäß einer weiteren vorteilhaften Ausgestaltung der erfindungsgemäßen Vorrichtung kann bei dieser ein Leerzeichen durch ein im Wesentlichen waagerechtes Streichen mit einem Finger über eine vorgebbare Strecke oder einen vorgebbaren Anteil der Breite eines berührungsempfindlichen Bildschirms oder Touchpad eingegeben werden.

Soweit in der vorliegenden Anmeldung der Ausdruck "im Wesentlichen waagerechten" verwendet wird, ist darunter eine Wischbewegung gemeint, die parallel zu der Richtung erfolgt, in der auch Zeichen/Symbole 2 auf der Anzeigeeinrichtung 1 angezeigt werden, wobei die Wischbewegung nicht zu 100% parallel zu dieser Richtung verlaufen muss, sondern eine Abweichung von bis zu 1 °, 2°, 3°, 4°, 5°, 6°, 7°, 8°, 9°, 10°, 15°oder 20° aufweisen darf.

Die "vorgebbare Strecke oder der vorgebbare Anteil der Breite des berührungsempfindlichen Bildschirms oder Touchpad" ist nicht besonders beschränkt, sollte aber ausreichend groß gewählt werden, um nur dann ein Löschen aller Zeichen auszulösen, wenn dies vom Nutzer so gewollt ist. Beispielsweise kann die "vorgebbare Strecke" 2 cm, 3 cm, 4 cm oder 5 cm betragen. Und der "Anteil der Breite" kann beispielsweise 10%, 15%, 20%, 25%, 30%, 35%, 40%, 45% oder 50% betragen.

Ein derartiges Eingeben liegt auch dem im in Fig. 2 gezeigten Beispiel zugrunde. Bei den Schriften, die von Links nach Rechts geschrieben werden, wird das Eingeben eines Leerzeichens vorzugsweise durch ein im Wesentlichen waagerechtes Streichen mit dem Finger von Links nach Rechts erfolgen. Bei Schriften, die von Rechts nach Links geschrieben werden, wird das Eingeben eines Leerzeichens demgegenüber vorzugsweise durch ein im Wesentlichen waagerechtes Streichen mit dem Finger von Rechts nach Links erfolgen.

Selbstverständlich stellt das in Fig. 2 gezeigte Beispiel nur eine von vielen Möglichkeiten für die Eingabe von Leerzeichen dar. Eine Eingabe von Leerzeichen kann durch jede geeignete Interaktion erfolgen, wobei erfindungsgemäß die angezeigte/ausgegebene Hilfeinformation natürlich in einer an die jeweilige Interaktion angepasste Weise erfolgt.

Das in Fig. 2 dargestellte Beispiel bezieht sich auf ein Navigationssystem. Die vorliegende Erfindung ist selbstverständlich nicht auf die Anwendung bei einem Navigationssystem beschränkt sondern kann für alle Arten von einem Fahrzeug zugeordneten Vorrichtungen verwendet werden, bei denen die Eingabe von Leerzeichen vorkommt oder vorkommen kann, wie beispielsweise eine Multi-Media-Anlage, eine Automobil-Telefonanlage oder ein in einem Fahrzeug integrierte Vorrichtung für einen Internetzugang.

Nach dem heutigen Stand der Technik erfolgt in der Regel eine Hilfestellung für eine Vorrichtung in einem Fahrzeug benutzerinitiiert oder wird systeminitiiert in Abhängigkeit von Rahmenbedingungen angezeigt und/oder ausgegeben (z.B. "Safelock beachten" beim Abstellen der Zündung).

Eine einfache Steuerung führt zur Belästigung des Fahrers bzw. Nutzers aufgrund von immer wiederkehrenden Hilfestellungen.

Durch die vorliegende Erfindung wird einem Nutzer eine Hilfestellung dahin angezeigt/ausgegeben, wie er bei einer Vorrichtung ein Leerzeichen eingeben kann.

Hierdurch ergibt sich eine optimale Unterstützung für den Nutzer. Auch verringert sich die Zeitdauer und die Aufmerksamkeit, die ein Nutzer für den Eingabevorgang für ein Leerzeichen und damit für den gesamten Eingabevorgang benötigt, wodurch eine im Sinne der Verkehrssicherheit unerwünschte Ablenkung des Fahrers vom Straßenverkehr minimiert wird.

## Patentansprüche

1. Verfahren zur Anzeige und/oder Ausgabe einer systeminitiierten Hilfe für die Bedienung einer einem Fahrzeug zugeordneten Vorrichtung, bei der wenigstens alphanumerische Zeichen und/oder Symbole (2) mittels einer Bedieneinrichtung eingeb- oder auswählbar und zu einer Zeichen- oder Funktionsgruppe zusammenstell- und in wenigstens einem Eingabefeld auf einer ersten Anzeigeeinrichtung (1) anzeigbar sind, und für einen Nutzer wenigstens eine Hilfeinformation (3) für wenigstens eine Bedienhandlung an der Vorrichtung visuell auf der ersten oder einer zweiten Anzeigeeinrichtung (1) anzeigbar und/oder mittels einer Lautsprechereinrichtung akustisch ausgebbar ist,
**dadurch gekennzeichnet, dass**
in einem ersten Schritt ein Erkennungsvorgang durchgeführt wird, aufgrund dessen erkannt wird, ob durch den Nutzer in einem nächsten Bedienschritt mit einem vorgebbaren Wahrscheinlichkeitsgrad ein Leerzeichen eingeben wird oder werden muss, und
in einem zweiten Schritt für den Fall, dass der Erkennungsvorgang ein positives Ergebnis aufweist, dem Nutzer eine Hilfestellung auf der ersten oder zweiten Anzeigeeinrichtung (1) angezeigt und/oder mittels der Lautsprechereinrichtung ausgegeben wird, wobei die Hilfestellung eine Hilfeinformation (3) darüber aufweist, wie bei der Vorrichtung mittels einer Bedienhandlung ein Leerzeichen eingegeben werden kann.

2. Verfahren gemäß Anspruch 1,
**dadurch gekennzeichnet, dass**
die Hilfeinformation (3) in Form von bewegten oder statischen Bildern, Zeichen, Text und/oder Symbolen angezeigt und/oder in Form eines gesprochenen Texts ausgegeben wird.

3. Verfahren gemäß Anspruch 1 oder 2,
wobei die Hilfeinformation (3) in Abhängigkeit davon angezeigt und/oder ausgegeben wird,
(a) wie oft die Hilfeinformation (3) für die Eingabe eines Leerzeichens bei der Vorrichtung während einer Fahrt bereits angezeigt und/oder ausgegeben wurde,
(b) wie oft die Hilfeinformation (3) für die Eingabe eines Leerzeichens bei der Vorrichtung einem erkannten und/oder bekannten Nutzer innerhalb eines vorgebbaren Zeitraums bereits angezeigt und/oder ausgegeben wurde, und/oder
(c) in welcher Art und Weise ein Nutzer ein Leerzeichen bei der Vorrichtung eingibt.

4. Verfahren gemäß einem der Ansprüche 1 bis 3,
**dadurch gekennzeichnet, dass**
die Hilfestellung aktivierbar und deaktivierbar ist.

5. Einem Fahrzeug zugeordnete Vorrichtung, mit einer Bedieneinrichtung, mit der wenigstens alphanumerische Zeichen und/oder Symbole (2) eingeb- oder auswählbar und zu einer Zeichen- oder Funktionsgruppe zusammenstellbar sind, mit einer ersten Anzeigeeinrichtung (1), auf der die Zeichen, Symbole, Zeichen- und/oder Funktionsgruppe in wenigstens einem Eingabefeld anzeigbar sind, und einer Hilfeeinrichtung, durch die für einen Nutzer wenigstens eine Hilfeinformation (3) für wenigstens eine Bedienhandlung an der Vorrichtung visuell auf der ersten oder einer zweiten Anzeigeeinrichtung (1) anzeigbar und/oder mittels einer Lautsprechereinrichtung akustisch ausgebbar ist,
**dadurch gekennzeichnet, dass**
sie Erkennungsmittel aufweist, mittels derer durch einen Erkennungsschritt erkannt wird, ob durch den Nutzer in einem nächsten Bedienschritt mit einem vorgebbaren Wahrscheinlichkeitsgrad ein Leerzeichen eingeben wird oder werden muss, und
die Hilfeeinrichtung dazu eingerichtet ist, dass für den Fall, dass durch das Erkennungsmittel ein positives Ergebnis des Erkennungsschritts festgestellt wird, dem Nutzer eine Hilfestellung auf der ersten oder zweiten Anzeigeeinrichtung (1) angezeigt und/oder mittels der Lautsprechereinrichtung ausgegeben wird, derart, dass die Hilfestellung eine Hilfeinformation (3) darüber aufweist, wie bei der Vorrichtung mittels einer Bedienhandlung ein Leerzeichen eingegeben werden kann.

6. Vorrichtung gemäß Anspruch 5,
**dadurch gekennzeichnet, dass**
die Hilfeeinrichtung dazu eingerichtet ist, dass sie die Hilfeinformation (3) in Form von bewegten oder statischen Bildern, Zeichen, Text und/oder Symbolen auf der ersten oder zweiten Anzeigeeinrichtung (1) anzeigt und/oder in Form eines gesprochenen Texts mittels der Lautsprechereinrichtung ausgibt.

7. Vorrichtung gemäß Anspruch 5 oder 6,
**dadurch gekennzeichnet, dass**
die Hilfeeinrichtung dazu eingerichtet ist, dass sie die Hilfeinformation (3) in Abhängigkeit davon anzeigt und/oder ausgibt,
(a) wie oft die Hilfeinformation (3) für die Eingabe eines Leerzeichens bei der Vorrichtung während einer Fahrt bereits angezeigt und/oder ausgegeben wurde,
(b) wie oft die Hilfeinformation (3) für die Eingabe eines Leerzeichens bei der Vorrichtung einem erkannten und/oder bekannten Nutzer innerhalb eines vorgebbaren Zeitraums bereits angezeigt und/oder ausgegeben wurde, und/oder
(c) in welcher Art und Weise ein Nutzer ein Leerzeichen bei der Vorrichtung eingibt.

8. Vorrichtung gemäß einem der Ansprüche 5 bis 7,
**dadurch gekennzeichnet, dass**
die Hilfeeinrichtung dazu eingerichtet ist, dass die Hilfestellung aktivierbar und deaktivierbar ist.

9. Vorrichtung gemäß einem der Ansprüche 5 bis 8,
**dadurch gekennzeichnet, dass**
die erste und/oder zweite Anzeigeeinrichtung (1) wenigstens einen Bildschirm und/oder ein Head-Up-Display, und
die Bedieneinrichtung wenigstens eine Taste, Tastatur, einen Dreh-/Drück-Steller, Joystick, ein Touchpad, einen berührungsempfindlichen Bildschirm und/oder eine Vorrichtung zur Spracheingabe und Spracherkennung umfasst.

10. Vorrichtung gemäß einem der Ansprüche 5 bis 9,
**dadurch gekennzeichnet, dass**
ein Leerzeichen durch ein im Wesentlichen waagerechtes Streichen mit einem Finger über eine vorgebbare Strecke oder einen vorgebbaren Anteil der Breite eines berührungsempfindlichen Bildschirms oder Touchpad eingegeben werden kann.

## Claims

1. A method for displaying and/or outputting a system-initiated help for operating a device allocated to a vehicle, the method comprising using an operating facility to input or select at least alphanumeric characters and/or symbols (2), the characters and symbols being assemblable to form a group of characters or a function group and being displayable in at least one input field on a first display device (1), at least one help information (3) for at least one operation action being visually displayable for a user on a first or second display device (1) and/or being acoustically outputtable by a loudspeaker,
**characterized in that**
in a first step, a recognition process is carried out to recognize with a predeterminable degree of probability whether a space will or must be input by the user as a next input action, and
in a second step, when it is recognized that a space will or must be input by the user, a help is displayed to the user on the first or second display device (1) and/or is output by the loudspeaker, the help comprising the help information (3) providing assistance on how a space can be input at the operating facility by an operating action.

2. The method according to claim 1,
**characterized in that**
the help information (3) is visually output by displaying moving or static images, characters, text and/or symbols and/or is acoustically output as a spoken text.

3. The method according to claim 1 or 2, wherein the help information (3) is displayed and/or output in dependence on
(a) how many times the help information (3) for inputting a space at the operating facility has already been displayed and/or output during a trip,
(b) when a current user is a recognized user, how many times the help information (3) for inputting a space at the operating facility has already been displayed and/or output to the recognized user within a predeterminable period of time, and
(c) the manner in which a current user inputs a space at the operating facility.

4. The method according to any of claims 1 to 3,
**characterized in that**
the help can be activated and deactivated.

5. A device allocated to a vehicle, the device using an operating facility to input or select at least alphanumeric characters and/or symbols (2), the characters and symbols being assemblable to form a group of characters or a function group, the device comprising a first display device (1) for displaying the characters, symbols, group of characters and/or function group in at least one input field, and a help device providing at least one help information (3) to a user for at least one operation action at the operating facility, the help information being visually displayable on a first or second display device (1) and/or acoustically outputtable by a loudspeaker,
**characterized in that**
the device comprises recognition means to recognize in a recognition step with a predeterminable degree of probability, whether a space will or must be input by the user as a next operating action; and
the help device is configured to provide help to the user when the recognition device recognizes in the recognition step that a space will or must be input by the user, the help being visually displayed on the first or second display device (1) and/or being acoustically output by a loudspeaker, such that the help comprises a help information (3) providing assistance on how a space can be input at the operating facility by an operating action.

6. The device according to claim 5,
**characterized in that**
the help device is configured to visually output the help information (3) on the first or second display device (1) as moving or static images, characters, text and/or symbols and/or to acoustically output the help information as a spoken text by a loudspeaker.

7. The device according to claim 5 or 6,
**characterized in that**
the help device is configured to display and/or output the help information (3) in dependence on
(a) how many times the help information (3) for inputting a space at the operating facility has already been displayed and/or output during a trip,
(b) when a current user is a recognized user, how many times the help information (3) for inputting a space at the operating facility has already been displayed and/or output to the recognized user within a predeterminable period of time, and/or
(c) the manner in which a current user inputs a space at the operating facility.

8. The device according to any of claims 5 to 7,
**characterized in that**
the help device is configured such that the help can be activated and deactivated.

9. The device according to any of claims 5 to 8,
**characterized in that**
the first and/or second display device (1) comprises at least one screen and/or a head-up display, and
the operating facility comprises at least one of a key, a keyboard, a rotary/push controller, a joystick, a touchpad, a touch-sensitive screen and/or a voice input and voice recognition device.

10. The device according to any of claims 5 to 9,
**characterized in that**
a space is input by a substantially horizontal stroking of a finger over a predeterminable distance or width proportion of a touch-sensitive screen or touchpad.

## Revendications

1. Procédé pour afficher et/ou à émettre une aide déclenchée par le système pour la commande d'un dispositif associé à un véhicule, dans lequel au moins des caractères alphanumériques et/ou des symboles (2) peuvent être saisis ou sélectionnés au moyen d'un système de commande et peuvent être regroupés en un groupe de caractères ou de fonctions et peuvent être affichés sur au moins un champ de saisie sur un premier système d'affichage (1) et au moins une information d'aide (3) pour au moins une action de commande au niveau du dispositif peut être affichée visuellement sur le premier ou sur un deuxième système d'affichage (1) et/ou peut être émise acoustiquement au moyen d'un système à haut-parleur à l'attention d'un utilisateur,
**caractérisé en ce**
**que** lors d'une première étape, une opération d'identification est exécutée, sur la base de laquelle il est identifié si une espace est saisie ou doit être saisie par l'utilisateur lors d'une étape de commande qui suit avec un degré de probabilité pouvant être prédéfini, et
**que** lors d'une deuxième étape, si l'opération d'identification présente un résultat positif, une aide destinée à l'utilisateur est affichée sur le premier ou sur le deuxième système d'affichage (1) et/ou est émise au moyen du système à haut-parleur, dans lequel l'aide présente une information d'aide (3) concernant la manière selon laquelle une espace peut être saisie au moyen d'une action de commande pour le dispositif.

2. Procédé selon la revendication 1,
**caractérisé en ce**
**que** l'information d'aide (3) est affichée sous la forme d'images dynamiques ou statiques, de caractères, de texte et/ou de symboles et/ou est émise sous la forme d'un texte parlé.

3. Procédé selon la revendication 1 ou 2,
dans lequel l'information d'aide (3) est affichée et/ou émise en fonction de
(a) la fréquence, selon laquelle l'information d'aide (3) pour la saisie d'une espace pour le dispositif a déjà été affichée et/ou émise au cours d'un trajet,
(b) la fréquence, selon laquelle l'information d'aide (3) pour la saisie d'une espace pour le dispositif a déjà été affichée et/ou émise à l'attention d'un utilisateur identifié et/ou connu dans un laps de temps pouvant être prédéfini, et/ou
(c) la manière avec laquelle un utilisateur entre une espace pour le dispositif.

4. Procédé selon l'une quelconque des revendications 1 à 3,
**caractérisé en ce**
**que** l'aide peut être activée et désactivée.

5. Dispositif associé à un véhicule, comprenant un système de commande, avec lequel au moins des caractères alphanumériques et/ou des symboles (2) peuvent être saisis ou sélectionnés et peuvent être regroupés en un groupe de caractères ou de fonctions, comprenant un premier système d'affichage (1), sur lequel les caractères, symboles, groupe de caractères et/ou de fonctions peuvent être affichés sur au moins un champ de saisie, et comprenant un système d'aide, par lequel au moins une information d'aide (3) pour au moins une action de commande au niveau du dispositif peut être affichée visuellement sur le premier ou sur un deuxième système d'affichage (1) et/ou peut être émise acoustiquement au moyen d'un système à haut-parleur à l'attention d'un utilisateur,
**caractérisé en ce**
**qu'**il présente des moyens d'identification, au moyen desquels il est identifié par une étape d'identification si une espace est saisie ou doit être saisie par l'utilisateur lors d'une étape de commande qui suit avec un degré de probabilité pouvant être prédéfini, et
**que** le système d'aide est mis au point afin qu'une aide soit affichée sur le premier ou sur le deuxième système d'affichage (1) et/ou soit émise au moyen du système à haut-parleur à l'attention de l'utilisateur si un résultat positif de l'étape d'identification a été constaté par le moyen d'identification de telle manière que l'aide présente une information d'aide (3) concernant la manière selon laquelle une espace peut être saisie au moyen d'une action de commande pour le dispositif.

6. Dispositif selon la revendication 5,
**caractérisé en ce**
**que** le système d'aide est mis au point afin qu'il affiche l'information d'aide (3) sous la forme d'images dynamiques ou statiques, de caractères, de texte et/ou de symboles sur le premier ou le deuxième système d'affichage (1) et/ou qu'il l'émette sous la forme d'un texte parlé au moyen du système à haut-parleur.

7. Dispositif selon la revendication 5 ou 6,
**caractérisé en ce**
**que** le système d'aide est mis au point afin qu'il affiche et/ou émette l'information d'aide (3) en fonction de
(a) la fréquence, selon laquelle l'information d'aide (3) pour la saisie d'une espace pour le dispositif a déjà été affichée et/ou émise au cours d'un trajet,
(b) la fréquence, selon laquelle l'information d'aide (3) pour la saisie d'une espace pour le dispositif a déjà été affichée et/ou émise à l'attention d'un utilisateur identifié et/ou connu dans un laps de temps pouvant être prédéfini, et/ou
(c) de la manière avec laquelle un utilisateur saisit une espace pour le dispositif.

8. Dispositif selon l'une quelconque des revendications 5 à 7,
**caractérisé en ce**
**que** le système d'aide est mis au point afin que l'aide puisse être activée et désactivée.

9. Dispositif selon l'une quelconque des revendications 5 à 8,
**caractérisé en ce**
**que** le premier et/ou le deuxième système d'affichage (1) comprend au moins un écran et/ou un affichage à tête haute, et
**que** le système de commande comprend au moins une touche, un clavier, un élément de réglage « pousser-tourner », une manette, un pavé tactile, un écran tactile et/ou un dispositif de saisie vocale et d'identification vocale.

10. Dispositif selon l'une quelconque des revendications 5 à 9,
**caractérisé en ce**
**qu'**une espace peut être saisie en faisant glisser de manière sensiblement horizontale un doigt sur une distance pouvant être prédéfinie ou sur une partie pouvant être prédéfinie de la largeur d'un écran tactile ou d'un pavé tactile.
